# EUROPÄISCHE PATENTANMELDUNG

(11) **EP 1 544 815 A1**
(43) Veröffentlichungstag der Anmeldung: **22.06.2005**
(21) Anmeldenummer: 03029455.7
(22) Anmeldetag: 19.12.2003
(51) Int. Cl.: G07F 19/00, G06F 17/00, H04L 29/06

(54) **Verfahren zur Vergebührung eines Dienstes in einem Kommunikationsnetz**

(71) Anmelder: SIEMENS AKTIENGESELLSCHAFT, 80333 München (DE)
(72) Erfinder: Held, Walter, 82538 Geretsried (DE)

(57) **Zusammenfassung**

Das beschriebene Verfahren erlaubt dem Betreiber eines Stateless Proxy bzw. Application Brokers auf einfache Art und Weise registrierten Application Service Anbietern und registrierten Kunden eine zuverlässige, in definierbaren Intervallen genaue und vertrauenswürdige Vergebührungsfunktion anzubieten, indem sich während der Diensterbringung Client und Server ständig im Hintergrund in regelmäßigen Abständen über einen unabhängigen Dritten (Proxy) über die dafür anfallenden Gebühren verständigen und die Vergebührungsfunktion auch von dem unabhängigen Dritten erbracht wird.

## Beschreibung

### Problemstellung der Erfindung

In einem paketorientierten Kommunikationsnetz mit Dienstanwendern (z.B. SIP-Clients), Diensterbringern (z.B. Applikations-Servern) und einem vermittelnden Applikationsbroker (z.B. SIP Proxy), der für die Dauer der Servicebeziehung zwischen einer Dienstnutzereinrichtung (Client) und einem Application Server nicht in diese Beziehung eingebunden ist, (d.h. z.B. kein Stateful SIP-Proxy), ist es für den Proxy unmöglich eine zuverlässige Vergebührungsfunktion für registrierte Kunden (Anwender und Diensteanbieter) bereitzustellen.

### Bisherige Lösungen der Problemstellung

- Proxy bleibt in der Kommunikationsbeziehung für die Dauer der Servicebeziehung (Stateful Proxy), oder
- Vergebührung läuft separat zwischen Application Server und Client ohne Einbeziehung des Proxies, d.h. der Betreiber des Proxies ist ausschließlich Access-Provider. Eine Gesamtrechnung aus einer Hand auch für in Anspruch genommene Dienste lassen sich - wenn überhaupt - dann nur mit großem Aufwand im Postprocessing erreichen -> Verteilte Billingfunktionen beim Proxy-Betreiber und beim Application Server Provider. Diese Lösung erfordert zum einen die Sicherstellung, daß der Nutzer eines Services auch gleichzeitig Kunde von Proxy- und Serverbetreiber ist, und zum anderen die Übermittlung von Daten an den zentralen Rechnungsersteller.

### Lösung der Problemstellung gemäß der Erfindung

Die Erfindung beschreibt ein Verfahren, wie in einem derartigen Scenario mit Client, Proxy (=Applikationsbroker, Applikationsvermittlungseinrichtung) und Applikationsserver eine für alle Partner zuverlässige Vergebührung erreicht werden kann, die zudem für den Anbieter (Provider) des Grunddienstes (Betreiber des Proxy) einen Mehrwertdienst darstellt. Dieser Provider ist damit in der Lage, seinem Endkunden eine zuverlässige Rechnung aus einer Hand mit paketorientierten Diensten von unterschiedlichsten Partner-Serviceprovidern anzubieten. Dabei kann der Grunddienstanbieter sowohl als einfacher Vermittler eines Dienstes, als auch als Zwischenhändler mit "Rebranding" auftreten (Unter "Rebranding" wird hierbei verstanden, dass der Betreiber des Proxy einen Dienst eines Partner-Serviceprovider nicht unter dem ursprünglichen Namen des Dienstes sondern unter einem eigenen Produktnamen anbietet).

Letztendlich ist der Zweck dieses Verfahren,
a) Registrierten Endkunden (Clients) mit einem Guthabenkonto in Echtzeit Nutzungsgebühren für angeforderte und genutzte Dienste zu verrechnen, oder
b) Registrierten Endkunden regelmäßig (z.B. monatlich) eine einheitliche Gesamtrechnung für alle genutzten Services von unterschiedlichen Providern zu erstellen.

Mit dem Verfahren wird sichergestellt, dass
a) der Kunde nur das bezahlt, was er nutzt, und
b) der Diensterbringer für seine Leistungen bezahlt wird.

Daneben schafft dieses Verfahren die Voraussetzung dafür, daß dem Kunden als Option schon während der Dienstenutzung in Realzeit angezeigt werden kann, welche Gebühren für den Dienst aufgelaufen sind, bzw. bei Prepaid-Service, wie viel Guthaben noch vorhanden ist.

Grundlage dieser Lösung ist eine zuverlässige Vergebührungsfunktion, in die alle Partner-Komponenten (Client, Proxy / Application Broker, Application Server) während der Dienstenutzung eingebunden sind.
Client: Authentifiziert sich beim Proxy und fordert Dienst an.
Proxy /Application Broker: Vermittelt Dienst und führt Buch über die Nutzung dieses Dienstes durch den Client.
Application Server: Bietet Dienst an und informiert mit Tickets den Proxy über Zustandekommen und Verlauf der Servicebeziehung zwischen ihm und dem Client.

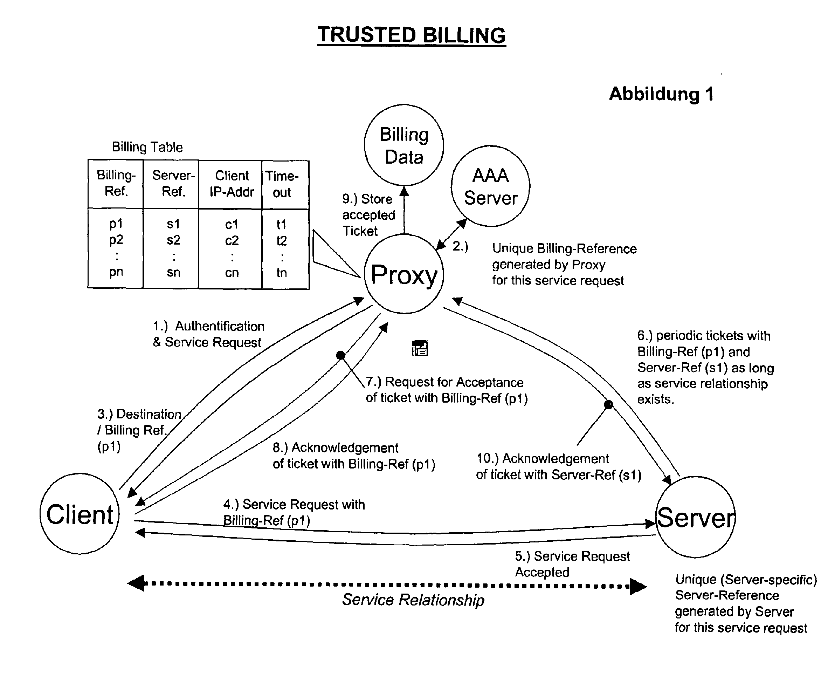

Abbildung 1 beschreibt bei einer Realisierungsvariante der Erfindung die Beziehungen der Partner-Komponenten untereinander und den prinzipiellen Ablauf von der Authentifizierung des Clients über die Dienstanforderung und Diensterbringung bis hin zur Vergebührung.
- Nachdem sich der Client mithilfe des Proxy bei dem Authentification-Authorization-Accounting-Server (AAA-Server) authentifiziert hat (1)/(2) erhält er von dem Proxy zusammen mit der Angabe, wo sich der Application Server befindet (Destination) eine Billing-Reference (pl), die vom Proxy zur Ausübung der Vergebührungsfunktion für die anstehende Dienstnutzung generiert wird (3).
- Der Client fordert mit der Information, die er vom Proxy erhalten hat, beim Application Server den gewünschten Dienst an (4). Dieser bestätigt die Dienstanforderung an den Client (5). Hiermit ist die Servicebeziehung zwischen Client und Application Server eingerichtet.
- Nachdem die Servicebeziehung zwischen Client und Application Server aufgebaut worden ist, und solange der Dienst genutzt wird, erstellt der Application Server in regelmäßigen Abständen (z.B. 1 pro Minute) Tickets, die an die Vergebührungsfunktion auf dem Proxy gesendet werden (6). Diese Tickets enthalten die Reference p1, die dem Proxy erlaubt, effizient auf die Vergebührungstabelle (Billing-Tabelle) zuzugreifen, und die Reference s1, die der Server selbst erstellt hat, und mit welcher er gegebenenfalls später bei einer Rückmeldung vom Proxy effizient auf seine Daten zugreifen und eine bestehende Service Relationship beenden kann.
- Nach Erhalt eines Tickets (6) ermittelt der Proxy anhand der in dem Ticket enthaltenen Reference p1 den Client (IP-Adresse C1) und fordert von diesem für jedes empfangene Ticket eine Bestätigung dieser Vergebührungsdaten an (7). Falls nach einer bestimmten Zeit (z.B. 1 Sekunde) die Bestätigung nicht empfangen wurde, wird die Anforderung (7) ein- oder zweimal wiederholt.
- Nach Empfang der Bestätigungsanforderung verifiziert der Client das Ticket und sendet gegebenenfalls eine Bestätigung an den Proxy (8).
- Nach Empfang einer Bestätigung vom Client speichert der Proxy das Ticket zu einer späteren Rechnungserstellung ab (9) und informiert den Server, dass der Client das Ticket bestätigt hat. Im Falle eines Prepaid-Kunden aktualisiert die Vergebührungsfunktion auf dem Proxy den Guthabenstand des Kunden.

### Sonderfälle bei der beschriebenen Realisierungsvariante der Erfindung:

### - Prepaid-Kunde:

Wenn das Guthaben eine bestimmte Schwelle unterschreitet informiert der Proxy den Client, daß das Guthaben fast aufgebraucht ist. Dies kann z.B. mit der nächsten Anforderung einer Bestätigung für ein Ticket erfolgen (7). Falls das Guthaben aufgebraucht ist, wird der Proxy den Eintrag in der Billing Table löschen und weitere Tickets vom Application Server für diesen Kunden nicht mehr akzeptieren und diese Tickets dem Server negativ quitieren, woraufhin dieser die Servicebeziehung zum Client gegebenenfalls beenden wird.
- Anforderung einer Ticketbestätigung (7) vom Client negativ quitiert:
   Der Proxy informiert den Application Server, dass ein Ticket negativ quittiert wurde, wobei er dem Application Server die Reference s1 zurückgibt. Anhand der Reference s1 ist der Server daraufhin in der Lage, die Servicebeziehung zum Client zu beenden.
- Ticketbestätigung vom Client trotz mehrmaliger Anforderung nicht erhalten:
   Der Proxy informiert den Application Server, dass er für ein Ticket keine Quittung vom Client erhalten konnte, wobei er dem Application Server die Reference s1 zurückgibt. Anhand der Reference s1 ist der Server daraufhin in der Lage, die Servicebeziehung zum Client zu beenden.
- Timer t1 für Billing Table Eintrag läuft ab.
   Um die Gültigkeit eines Billig Table Eintrags zu sichern, überwacht der Proxy den Eingang der Tickets vom Server. Sobald ein Ticket (6) eintrifft, wird der eingestellte Timer zurückgesetzt. Bei Ablauf des Timers wird der Eintrag in der Tabelle gelöscht. Eventuell nachfolgend eintreffende Tickets vom Server werden negativ quittiert.

### Bemerkungen:

- Zu beachten ist, daß dieses Verfahren nicht erfordert, dass Server und/oder Client sich bei Beendigung der Servicebeziehung beim Proxy abmelden. So erfolgt auch die Versendung eines Vergebührungstickets an den Client immer im Voraus für das aktuelle Vergebührungsintervall. Damit ist sichergestellt, daß der Client nicht kostenpflichtige Dienste in Anspruch nimmt, ohne dass er dafür bezahlt, indem er vor Ablauf eines Vergebührungsintervalls einfach den Dienst abbricht, um zu verhindern, dass er für das vergangene Intervall vergebührt wird.
- Der Überwachungstimer t1 in der Billing Table muss auf jeden Fall größer als die Länge des Vergebührungsintervall sein, das zwischen Client und Application Server vereinbart wird. Es muß groß genug gewählt werden, um zu vermeiden, dass eine verloren gegangene (und deshalb vom Server wiederholte) Ticketnachricht an den Proxy dazu führt, dass dieser den Billing Table Eintrag für ungültig erklärt. Gleichzeitig darf t1 aber nicht zu groß gewählt werden, um zu vermeiden, dass beispielsweise Denial-of-Service Attacken von böswilligen Clients zu einer Verknappung der Billing Table Resourcen und letztlich zu einer Nichtverfügbarkeit dieser Dienste führt. Ein vernünftiger Wert für t1 ist 2-3 Mal die Länge des Vergebührungsintervalls. Da die Länge der Vergebührungsintervalle der einzelnen Servicebeziehungen (siehe Abb. 1) unterschiedlich sein können, wird die Länge des Überwachungstimer t1 variabel gestaltet. Sobald der Proxy ein Ticket vom Server erhält, verwendet er die darin angegebene Länge des Vergebührungsintervall und bestimmt daraus die Länge von t1, um den Empfang des nächsten Tickets vom Server für diese Servicebeziehung zu überwachen. Bis zum Empfang des ersten Tickets vom Server wird ein für die Billing Table einheitlicher fester Initialwert für diesen Timer verwendet (z.B. 5 Sekunden).
- Mögliche vertrauensbildende Maßnahmen zwischen Client und Application Server: Die Konditionen für die Servicebeziehung (Länge und Kosten des 1. Intervals, Länge und Kosten der Folgeintervalle) werden zwischen Client und Server vereinbart. Durch die Wahl eines kurzen 1. Intervals und ggf. Sonderkonditionen dafür kann sichergestellt werden, daß auch im Falle einer Nichterbringung der Leistung (z.B. Serverausfall, SW-Fehler, Inkompatibilität von Client und Serversoftware) trotz aufgebauter Servicebeziehung für den Dienstanwender kein oder nur ein geringer Nachteil entsteht.
- Bei Ausfall der Vergebührungsfunktion des Proxies kann der Application Server aufgrund der ausbleibenden Quittung auf das Ticket die Servicebeziehung zum Client gegebenenfalls abbrechen.
- Bei Ausfall des Clients wird das Gebührenkonto des Kunden nicht fälschlicherweise weiter vom Server belastet, da Client nicht mehr in der Lage ist, weitere Ticketbestätigungsanforderungen des Proxy zu quittieren (siehe Sonderfälle).
- Funktionalität beim Client erweiterbar z.B. um
   i. Kummulierung der vom Proxy übermittelten Gebührennachrichten und Anzeige dieser Gebühren am Terminal zur Gebühren-überwachung in Realzeit.
   ii. Möglichkeit für Endbenutzer als Option Tickets manuell zurückzuweisen, z.B. bei Erreichen eines bestimmten selbstgesetzten Gebührenlimits.

Zusammenfassend kann folgendes gesagt werden. Das beschriebene Verfahren erlaubt dem Betreiber eines Stateless Proxy bzw. Application Brokers auf einfache Art und Weise registrierten Application Service Anbietern und registrierten Kunden eine zuverlässige, in definierbaren Intervallen genaue und vertrauenswürdige Vergebührungsfunktion anzubieten, indem sich während der Diensterbringung Client und Server ständig im Hintergrund in regelmäßigen Abständen über einen unabhängigen Dritten (Proxy) über die dafür anfallenden Gebühren verständigen und die Vergebührungsfunktion auch von dem unabhängigen Dritten erbracht wird.

### Anwendungsbeispiele der Erfindung

- Auskunftsdienste
- Videodienste
- Telefonzusatzdienste, wie z.B. Konferenzen über Konferenzserver
- Mailboxabfragen
- anonymes Billing für Gateways, die aus dem offenen Internet angesteuert werden

## Patentansprüche

1. Dienstvermittlungseinrichtung, die
a) von einem Client eine Dienstanforderung empfängt,
b) daraufhin eine Authentifizierung durchführt und dem Client nach einer erfolgreichen Authentifizierung eine Reference auf einen Application Server zur Durchführung des angeforderten Dienstes mitteilt,
c) von dem Application Server erstellte Vergebührungstickets empfängt, wobei die Tickets Informationen hinsichtich der vor bzw. während der Dienstnutzung anfallenden Gebühren enthalten,
d) bezüglich eines empfangenen Tickets jeweils eine Bestätigungsanfrage an den Client richtet,
e) für das Ticket einer Gebührenregistrierungsaktion durchführt, falls der Client das Ticket bestätigt.

2. Dienstvermittlungseinrichtung nach Anspruch 1
**dadurch gekennzeichnet,**
**dass** die genannte Gebührenregistrierungsaktion darin besteht, dass die Dienstvermittlungseinrichtung den Guthabenstand oder Gebührenstand des Client aktualisiert.

3. Dienstvermittlungseinrichtung nach Anspruch 1
**dadurch gekennzeichnet,**
**dass** die genannte Gebührenregistrierungsaktion darin besteht, dass sie das Ticket zu einer späteren Rechungserstellung abspeichert.

4. Dienstvermittlungseinrichtung nach einem der Ansprüche 1 bis 3,
**dadurch gekennzeichnet,**
**dass** sie dem Client die für die Gebührenregistrierungsaktion herangezogene Gebühr mitteilt.

5. Application Server, der
a) von einem Client eine Dienstanforderung empfängt, wobei die Dienstanforderung eine Reference auf eine Dienstvermittlungseinrichtung enthält,
b) bezüglich des Dienstes Vergebührungs-Tickets erstellt und diese an die Dienstvermittlungseinrichtung sendet, wenn er den Service-Request annimmt, wobei die Tickets Informationen hinsichtich der vor bzw. während der Durchführung des Dienstes für den Client fällig werdenden Gebühren enthalten,
c) von der Dienstvermittlungseinrichtung Mitteilungen darüber empfängt, ob die Tickets durch den Client bestätigt werden,
d) die Durchführung des Dienstes aufrechterhält, solange die Tickets durch den Client positiv bestätigt werden.

6. Application Server nach Anspruch 5,
**dadurch gekennzeichnet,**
**dass** er die Servicebeziehung zum Client beendet, wenn er von der Dienstvermittlungseinrichtung die Mitteilung empfängt, dass der Client eine Bestätigungsanfrage bezüglich eines Tickets negativ quittiert hat.

7. Application Server nach Anspruch 5,
**dadurch gekennzeichnet,**
**dass** er die Servicebeziehung zum Client beendet, wenn er von der Dienstvermittlungseinrichtung die Mitteilung empfängt, dass der Client eine Bestätigungsanfrage bzw. mehrere Bestätigungsanfragen bezüglich eines Tickets überhaupt nicht quittiert hat.

8. Application Server nach Anspruch 5,
**dadurch gekennzeichnet,**
**dass** er die Servicebeziehung zum Client beendet, wenn er von der Dienstvermittlungseinrichtung überhaupt keine Quittung auf das von ihm generierte Ticket erhält.

9. Application Server nach Anspruch 5,
**dadurch gekennzeichnet,**
**dass** er die Servicebeziehung zum Client beendet, wenn er von der Dienstvermittlungseinrichtung im Falle eines Prepaid-Nutzers bezüglich eines Tickets die Mitteilung erhält, dass kein ausreichendes Guthaben mehr vorhanden ist.

10. Client, der
a) an eine Dienstvermittlungseinrichtung eine Dienstanforderung stellt,
b) nach einer erfolgreichen Authentifizierung der Dienstanforderung von der Dienstvermittlungseinrichtung eine Reference auf den angeforderten Dienst empfängt,
c) anhand der genannten Reference eine Servicebeziehung zu einem Application Server des angeforderten Dienstes aufbaut,
d) von der Dienstvermittlungseinrichtung Bestätigungsanfragen bezüglich des Dienstes fällig werdender Gebühren empfängt,
e) die genannten Bestätigungsanfragen gegenüber der Dienstvermittlungseinrichtung verifiziert und beanwortet.

11. Client nach Anspruch 10,
**dadurch gekennzeichnet,**
**dass** er die von der Dienstvermittlungseinrichtung mithilfe der Bestätigungsanfragen übermittelten Gebührennachrichten kumuliert und diese Gebühren dem Endnutzer zur Gebührenüberwachung in Realzeit anzeigt.

12. Client nach Anspruch 10 oder 11,
**dadurch gekennzeichnet,**
**dass** er es dem Endbenutzer erlaubt, eine Gebührennachricht manuell zu beantworten.

13. Verfahren zur Vergebührung eines Dienstes in einem Kommunikationsnetz, demgemäß
f) von einem Client an eine Dienstvermittlungseinrichtung eine Dienstanforderung gestellt wird,
g) daraufhin mithilfe der Dienstvermittlungseinrichtung eine Authentifizierung durchgeführt wird, wobei dem Client von der Dienstvermittlungseinrichtung nach einer erfolgreichen Authentifizierung eine Dienst-Reference auf den angeforderten Dienst mitgeteilt wird,
h) von dem Client anhand der genannten Dienst-Reference eine Servicebeziehung zu einem Application Server des angeforderten Dienstes aufgebaut wird,
i) von dem Client dem Application Server eine Reference auf die Dienstvermittlungseinrichtung mitgeteilt wird,
j) von dem Application Server Tickets erstellt und an die Dienstvermittlungseinrichtung gesendet werden, wobei die Tickets Informationen hinsichtlich der vor bzw. während der Dienstnutzung anfallenden Gebühren enthalten,
k) von der Dienstvermittlungseinrichtung bezüglich eines Tickets eine Bestätigungsanfrage an den Client gerichtet wird,
l) falls das Ticket bestätigt wird, von der Dienstvermittlungseinrichtung das Ticket zu einer Gebührenregistrierungsaktion herangezogen wird.

14. Verfahren nach Anspruch 13,
**dadurch gekennzeichnet,**
**dass**
a) das Ergebnis der Bestätigungsanfrage von der Dienstvermittlungseinrichtung an den Application Server weitergeleitet wird,
b) die Durchführung des Dienstes seitens des Application Servers aufrechterhalten wird, solange die Tickets durch den Client positiv bestätigt werden.
